# EUROPEAN PATENT SPECIFICATION

(11) **EP 2 894 117 B1**
(45) Date of publication and mention of the grant of the patent: **21.09.2016**
(21) Application number: 14151188.1
(22) Date of filing: 14.01.2014
(51) Int. Cl.: B65G 27/32

(54) **A material feeding assembly**
Materialzufuhranordnung
Ensemble d'alimentation en matériau

(43) Date of publication of application: 15.07.2015
(73) Proprietor: Portafill International Limited, Omagh Tyrone BT79 9JR (GB)
(72) Inventor: Rafferty, Malachy James, Omagh, Tyrone BT79 PJR (GB)
(74) Representative: Schütte, Gearoid

(56) References cited:
- FR-A1- 2 788 260
- US-A- 4 128 161
- US-A- 5 220 846
- US-B1- 6 349 817

## Description

### Introduction

This invention relates to a material feeding assembly, and in particular to a vibrating feeding assembly for use with aggregate material handling equipment.

The invention particularly relates to vibrating feeders used with aggregate handling equipment such as rock crushers, grading screens and the like. Vibrating units such as vibrating motors are commonly mounted on feed hoppers for such equipment to facilitate movement of the material being handled, urging the material towards and through an outlet of the feed hopper. However, some materials, depending upon their composition, feed more easily through the feed hopper than others. This can be problematic where it is desirable to use the feed hopper to handle different materials.

The present invention is directed towards overcoming this problem.

US 4,128,161 discloses a material feeding assembly according to the preamble of claim 1, a vibratory device having a parts track supported by springs on a base support. Inertial drive devices are clamped to the track to vibrate the track in order to move parts along the track. Each inertial drive device can be rotated when the clamp is released to provide a desired angle of oscillation.

### Summary of the Invention

According to the invention there is provided a material feeding assembly including:
a material handling container,
a resilient container mount for mounting the container on a support,
a vibrating unit mounted on the container and being operable to vibrate the container,
the vibrating unit being mounted on the container by a mount which is adjustable to adjust the direction of throw from the vibrating unit,
characterised in that the mount comprises a pipe having flanged ends, a pair of vibrating units being mounted on the pipe, one of the vibrating units being attached to each flanged end of the pipe, the pipe being clamped to the material handling container, the pipe seating in two or more spaced-apart supports on the container, each support having a semi-circular bearing face for complementary reception of the pipe, a clamping plate associated with each support having a semi-circular bearing face for complementary engagement with the pipe and fasteners for releasably securing the clamp plate to the support for clamping the pipe between the support and the clamp plate.

In one embodiment of the invention, the mount is rotatable on the container about a rotational axis which is substantially perpendicular to the direction of throw of the vibrating unit.

In another embodiment, the rotational axis of the mount is substantially parallel to a bottom of the container.

In another embodiment, the mount is attached to the bottom of the container.

In another embodiment, an angle guide plate is attached to the mount, the angle guide plate having an array of spaced-apart angle setting holes which cooperate by means of a locking pin with an associated locating hole on the container to rotationally position the mount on the container.

In another embodiment, an angle guide plate is provided adjacent each end of the pipe.

In another embodiment, the material handling container is a feed hopper for material handling equipment.

In another embodiment, the material handling container is a screen assembly.

### Brief Description of the Invention

The invention will be more clearly understood by the following description of some embodiments thereof, given by way of example only with reference to the accompanying drawings, in which:

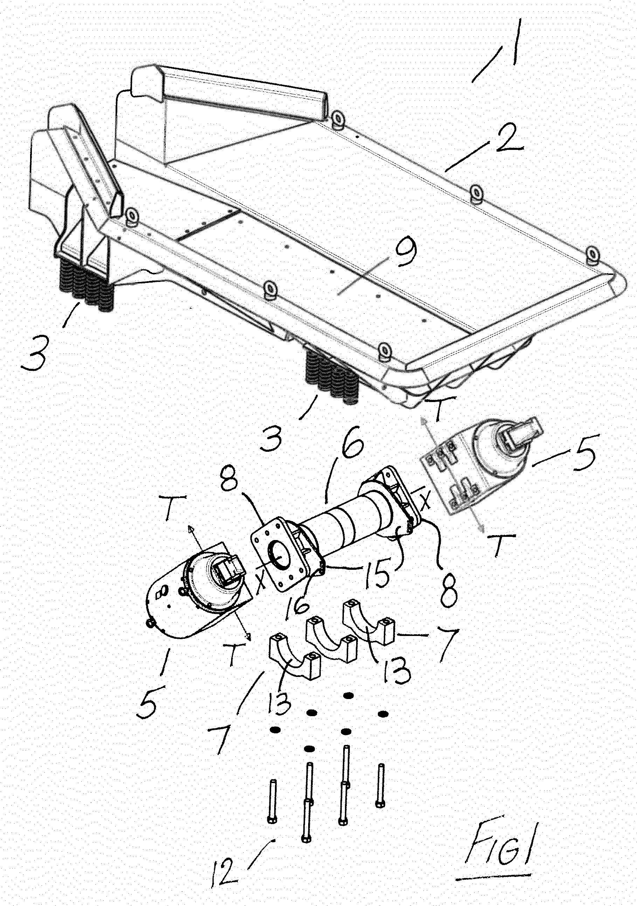

Fig. 1 is an exploded perspective view of a material feeding assembly according to the invention;

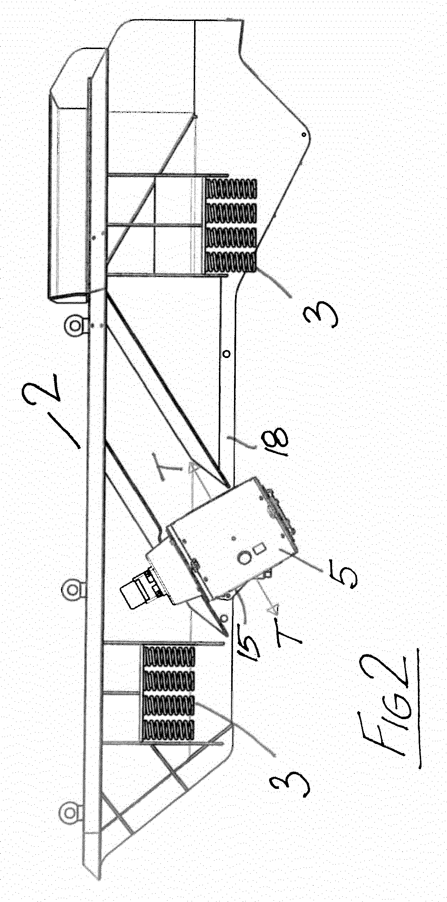

Fig. 2 is an elevational view of the material feeding assembly;

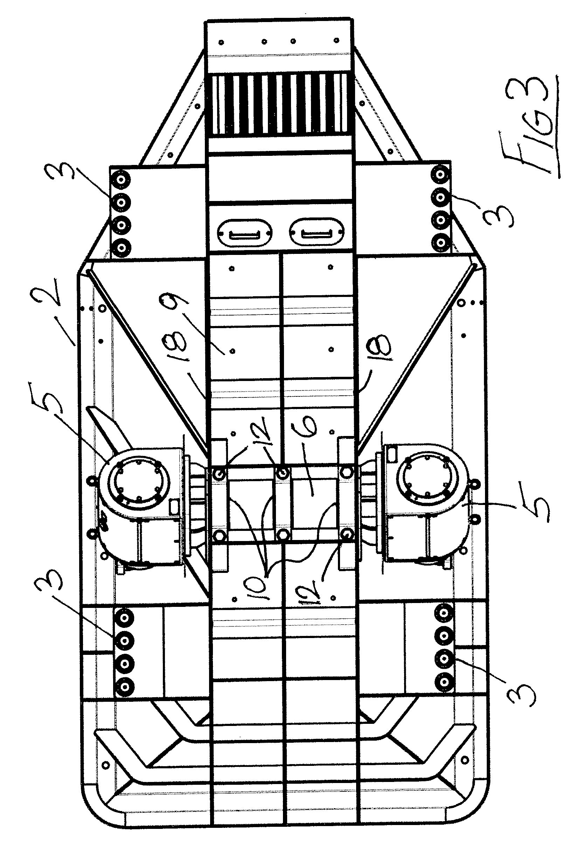

Fig. 3 is an underneath plan view of the material feeding assembly;

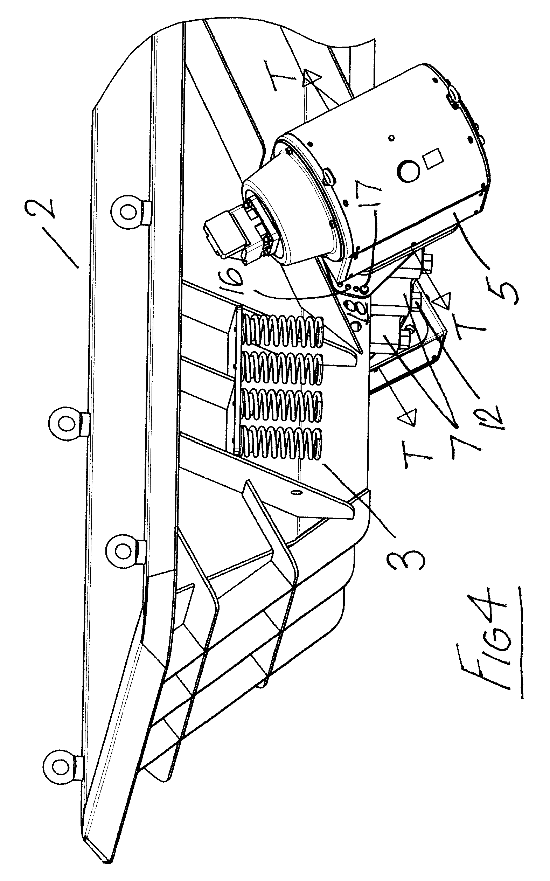

Fig. 4 is a detail perspective view showing portion of the material feeding assembly; and
Fig. 5 is a detail underneath perspective view showing a vibrating motor mounting arrangement of the material feeding assembly.

### Detailed Description of the Preferred Embodiments

Referring to the drawings, there is illustrated a material feeding assembly according to the invention indicated generally by the reference numeral 1. The material feeding assembly 1 has a material handling container 2 which in this case comprises a feed hopper for material handling equipment such as a rock crusher or the like. A resilient container mount is formed by a number of spaced-apart sets of springs 3 mounted at opposite sides of the container 2 for mounting the container 2 on a support such as a frame or chassis (not shown). Vibrating units, comprising in this case two vibrating motors 5, are mounted on a bottom of the container 2 by a mounting support which in this case comprises a pipe 6 which is clamped to an underside of the container 2 by a number of spaced-apart clamp plates 7. These clamp plates 7 can be loosened to allow rotation of the pipe 6 to adjust the direction of throw T of each vibrating motor 5, the clamp plates 7 operable for clamping the pipe 6 to the underside of the container 2 in a number of angularly displaced positions.

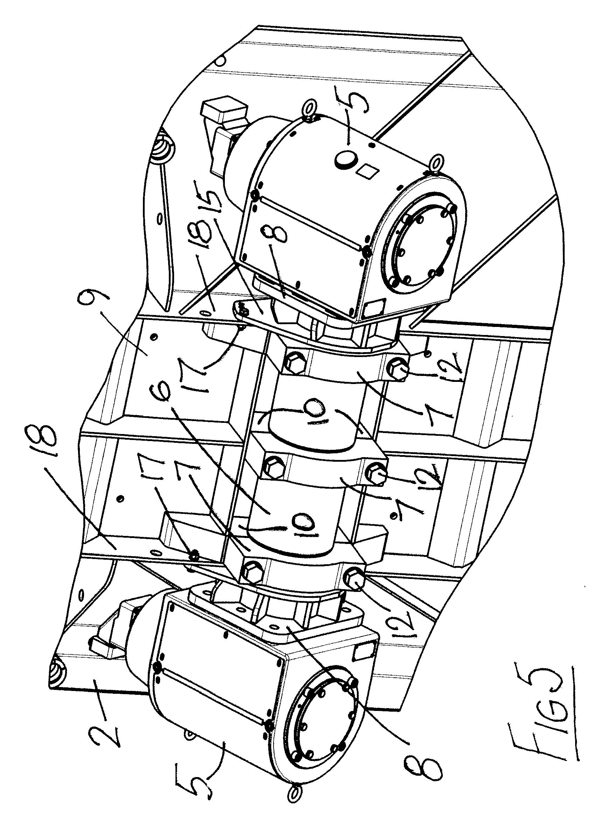

The pipe 6 has flanged ends 8 to which the vibrating motors 5 are bolted. A rotational axis X of the pipe 6 is substantially parallel to a bottom 9 of the container 2. The pipe 6 seats in three spaced-apart supports10 (Fig. 5) on an underside of the container 2. Each support 10 has a semi-circular bearing face for complementary reception of the pipe 6. A clamp plate 7 is associated with each support 10 and can be fastened by means of bolts 12 to each support 10 to clamp the pipe 6 therebetween. Each clamp plate 7 has a semi-circular bearing face 13 for complementary engagement with an outer circumferential face of the pipe 6.

An angle guide plate 15 projects radially outwardly adjacent each end of the pipe 6. Each angle guide plate 15 has an array of spaced-apart angle setting holes 16 which cooperate by means of a locking pin 17, formed by a bolt and associated lock nut, with an associated locating hole on a downwardly projecting rib 18 reinforcing the bottom 9 of the container 2.

In use, to adjust the direction of throw T of the vibrating motors 5, the bolts 12 are slackened off, loosening the clamp plates 7, to allow the pipe 6 to rotate. Upon removal of the locking pins 17, the pipe 6 can be rotated to adjust the direction of throw T of the vibrating motors 5, to control the vibrating motion applied to the container 2 by the vibrating motors 5, and then the locking pins 17 are re-engaged with the appropriate hole 16 on the angle guide plate 15 and the clamp plates 7 are tightened by the bolts 12 to again clamp the pipe 6 on the underside of the container 2. The spacing of the angle setting holes 16 in the angle guide plate 15 are such as to allow adjustment of the direction of throw T of the vibrating motors 5 in 5° increments. In the particular embodiment shown in the drawings by way of example, the direction of throw T of the vibrating motors 5 can be set at increments of 5° between 30° to 45° to the bottom 9 of the container 2. However any other incremental spacing could be provided. Thus the vibrating unit assembly can be set at varying angles to the bottom 9 of the container 2.

While the guide plates 15 conveniently aid in adjusting the vibrating unit assembly, they are not essential. After releasing the clamp plates 7 the pipe 6 with the vibrating motors 5 attached could simply be swivelled to any desired angle and then held in position by securing the clamp plates 7 again. It will be noted that the vibrating unit assembly could be arranged for adjustment in an incremental manner or in a continuous manner through a desired arc of rotation.

It will be appreciated that the direction of throw T of the vibrating motors 5 can be readily easily adjusted to facilitate optimum handling of different materials delivered to the container 2.

The vibrating motors may conveniently be electrically or hydraulically driven. Any other equivalent vibrating unit may be provided.

The invention is not limited to the embodiments hereinbefore described which may be varied in both construction and detail within the scope of the appended claims.

## Claims

1. A material feeding assembly (1) including
a material handling container (2),
a resilient container mount (3) for mounting the container (2) on a support,
a vibrating unit (5) mounted on the container (2) and being operable to vibrate the container (2),
the vibrating unit (5) is mounted on the container (2) by a mount (6) which is adjustable to adjust the direction of throw (T) from the vibrating unit (5),
**characterised in that** the mount comprises a pipe (6) having flanged ends (8), a pair of vibrating units (5) being mounted on the pipe (6), one of the vibrating units (5) being attached to each flanged end (8) of the pipe (6), the pipe (6) being clamped to the material handling container (2), the pipe (6) seating in two or more spaced-apart supports (10) on the container (2), each support (10) having a semi-circular bearing face for complementary reception of the pipe (6), a clamping plate (7) associated with each support (10) having a semi-circular bearing face (13) for complementary engagement with the pipe (6) and fasteners (12) for releasably securing the clamp plate (7) to the support (10) for clamping the pipe (6) between the support (10) and the clamp plate (7).

2. The material feeding assembly (1) as claimed in claim 1 wherein the mount (6) is rotatable on the container (2) about a rotational axis (X) which is substantially perpendicular to the direction of throw (T) of the vibrating unit (5).

3. The material feeding assembly (1) as claimed in claim 1 or claim 2 wherein the rotational axis of the mount (6) is substantially parallel to a bottom (9) of the container (2).

4. The material feeding assembly (1) as claimed in any preceding claim wherein the mount (6) is attached to the bottom (9) of the container (2).

5. The material feeding assembly (1) as claimed in any preceding claim wherein an angle guide plate (15) is attached to the mount (6), the angle guide plate (15) having an array of spaced-apart angle setting holes (16) which cooperate by means of a locking pin (17) with an associated locating hole on the container (2) to rotationally position the mount (6) on the container (2).

6. The material feeding assembly (1) as claimed in claim 5 wherein an angle guide plate (15) is provided adjacent each flanged end of the pipe (6).

7. The material feeding assembly (1) as claimed in any preceding claim wherein the material handling container (2) is a feed hopper for material handling equipment.

8. The material feeding assembly (1) as claimed in any one of claims 1 to 6 wherein the material handling container (2) is a screen assembly.

## Patentansprüche

1. Materialaufgabeanordnung (1), die Folgendes umfasst:
einen Materialförderbehälter (2),
eine elastische Behälterhalterung (3) zum Anbringen des Behälters (2) auf einer Abstützung,
eine Rütteleinheit (5), die an dem Behälter (2) angebracht ist und wirksam ist, um den Behälter (2) zu rütteln,
wobei die Rütteleinheit (5) durch eine Halterung (6) an dem Behälter (2) angebracht ist, die verstellbar ist, um die Richtung des Hubs (T) von der Rütteleinheit (5) zu verstellen,
**dadurch gekennzeichnet, dass** die Halterung Folgendes umfasst: ein Rohr (6) mit angeflanschten Enden (8), wobei ein Paar Rütteleinheiten (5) an dem Rohr (6) angebracht sind, wobei an jedem angeflanschten Ende (8) des Rohrs (6) eine der Rütteleinheiten (5) befestigt ist, wobei das Rohr (6) an den Materialförderbehälter (2) geklemmt ist, wobei das Rohr (6) in zwei oder mehr voneinander beabstandeten Lagern (10) an dem Behälter (2) sitzt, wobei die Lager (10) jeweils eine halbkreisförmige Auflagefläche zur komplementären Aufnahme des Rohrs (6) aufweisen, wobei mit jedem Lager (10) eine Klemmplatte (7) mit einer halbkreisförmigen Auflagefläche (13) für den komplementären Eingriff mit dem Rohr (6) assoziiert ist, und Befestigungselemente (12) zum lösbaren Fixieren der Klemmplatte (7) an dem Lager (10) zum Klemmen des Rohrs (6) zwischen dem Lager (10) und der Klemmplatte (7).

2. Materialaufgabeanordnung (1) nach Anspruch 1, wobei die Halterung (6) an dem Behälter (2) um eine Drehachse (X) drehbar ist, die im Wesentlichen senkrecht zur Richtung des Hubs (T) der Rütteleinheit (5) ist.

3. Materialaufgabeanordnung (1) nach Anspruch 1 oder Anspruch 2, wobei die Drehachse der Halterung (6) im Wesentlichen parallel zu einem Boden (9) des Behälters (2) ist.

4. Materialaufgabeanordnung (1) nach einem der vorangehenden Ansprüche, wobei die Halterung (6) an dem Boden (9) des Behälters (2) befestigt ist.

5. Materialaufgabeanordnung (1) nach einem der vorangehenden Ansprüche wobei eine Winkelführungsplatte (15) an der Halterung (6) befestigt ist, wobei die Winkelführungsplatte (15) eine Gruppierung von voneinander beabstandeten Winkeleinstelllöchern (16) aufweist, die mittels eines Sicherungsstifts (17) mit einem zugehörigen Aufnahmeloch an dem Behälter (2) zusammenwirken, um die Halterung (6) in Bezug auf Drehung an dem Behälter (2) zu positionieren.

6. Materialaufgabeanordnung (1) nach Anspruch 5, wobei jedem angeflanschten Ende des Rohrs (6) benachbart eine Winkelführungsplatte (15) vorgesehen ist.

7. Materialaufgabeanordnung (1) nach einem der vorangehenden Ansprüche, wobei es sich bei dem Materialförderbehälter (2) um einen Aufgabetrichter für Materialförderausrüstung handelt.

8. Materialaufgabeanordnung (1) nach einem der Ansprüche 1 bis 6, wobei es sich bei dem Materialförderbehälter (2) um eine Siebanordnung handelt.

## Revendications

1. Ensemble d'alimentation en matériau (1) comprenant
un contenant de manipulation de matériau (2),
un dispositif de montage de contenant résilient (3) à des fins de montage du contenant (2) sur un support,
une unité vibrante (5) montée sur le contenant (2) et servant à faire vibrer le contenant (2),
l'unité vibrante (5) est montée sur le contenant (2) par un dispositif de montage (6) qui est en mesure d'être ajusté pour ajuster la direction de rebond (T) de l'unité vibrante (5),
**caractérisé en ce que** le dispositif de montage comporte un tuyau (6) ayant des extrémités à bride (8), une paire d'unités vibrantes (5) étant montées sur le tuyau (6), l'une des unités vibrantes (5) étant attachée à chaque extrémité à bride (8) du tuyau (6), le tuyau (6) étant fixé sur le contenant de manipulation de matériau (2), le tuyau (6) étant posé dans deux supports (10) espacés ou plus sur le contenant (2), chaque support (10) ayant une face d'appui semi-circulaire à des fins de réception complémentaire du tuyau (6), une plaque de fixation (7) associée à chaque support (10) ayant une face d'appui semi-circulaire (13) à des fins de mise en prise complémentaire avec le tuyau (6) et des dispositifs d'attache (12) à des fins de d'assujettissement libérable de la plaque de fixation (7) au support (10) pour fixer le tuyau (6) entre le support (10) et la plaque de fixation (7).

2. Ensemble d'alimentation en matériau (1) selon la revendication 1, dans lequel le dispositif de montage (6) est rotatif sur le contenant (2) autour d'un axe de rotation (X) qui est sensiblement perpendiculaire par rapport à la direction de rebond (T) de l'unité vibrante (5).

3. Ensemble d'alimentation en matériau (1) selon la revendication 1 ou la revendication 2, dans lequel l'axe de rotation du dispositif de montage (6) est sensiblement parallèle par rapport à un fond (9) du contenant (2).

4. Ensemble d'alimentation en matériau (1) selon l'une quelconque des revendications précédentes, dans lequel le dispositif de montage (6) est attaché au fond (9) du contenant (2).

5. Ensemble d'alimentation en matériau (1) selon l'une quelconque des revendications précédentes, dans lequel une plaque de guidage d'angle (15) est attachée au dispositif de montage (6), la plaque de guidage d'angle (15) ayant un réseau de trous de réglage d'angle (16) espacés les uns des autres qui coopèrent au moyen d'une goupille d'arrêt (17) avec un trou de repérage associé sur le contenant (2) pour positionner de manière rotative le dispositif de montage (6) sur le contenant (2).

6. Ensemble d'alimentation en matériau (1) selon la revendication 5, dans lequel une plaque de guidage d'angle (15) est mise en oeuvre de manière adjacente par rapport à chaque extrémité à bride du tuyau (6).

7. Ensemble d'alimentation en matériau (1) selon l'une quelconque des revendications précédentes, dans lequel le contenant de manipulation de matériau (2) est une trémie d'alimentation pour un équipement de manipulation de matériau.

8. Ensemble d'alimentation en matériau (1) selon l'une quelconque des revendications 1 à 6, dans lequel le contenant de manipulation de matériau (2) est un ensemble formant crible.
